# EUROPÄISCHE PATENTSCHRIFT

(11) **EP 1 893 329 B1**
(45) Veröffentlichungstag und Bekanntmachung des Hinweises auf die Patenterteilung: **24.08.2011**
(21) Anmeldenummer: 05751661.9
(22) Anmeldetag: 08.06.2005
(51) Int. Cl.: B01J 20/12

(54) **AKTIVIERUNGSVERFAHREN VON OBERFLÄCHENREICHEN TONEN ZUR HERSTELLUNG VON BLEICHERDEN**
PRODUCTION OF BLEACHING EARTH BY ACTIVATION OF SURFACE-RICH CLAYS
PRODUCTION DES TERRES DECOLORANTES PAR ACTIVATION DES ARGILES A SURFACE RICHE

(43) Veröffentlichungstag der Anmeldung: 05.03.2008
(73) Patentinhaber: SÜD-CHEMIE AG, 80333 München (DE)
(72) Erfinder: SCHURZ, Klaus, 81477 München (DE)
(74) Vertreter: Stolmár, Matthias
(86) Internationale Anmeldenummer: PCT/EP2005/006174
(87) Internationale Veröffentlichungsnummer: WO 2006/131136

(56) Entgegenhaltungen:
- EP-A- 0 398 636
- WO-A-2004/105936

## Beschreibung

Die Erfindung betrifft ein Verfahren zur Herstellung eines Adsorptionsmittels, sowie ein verfahren zur Raffination um Fellen und/oder Ölen

Bei der industriellen Herstellung von Ölen und Fetten werden Bleicherden zur Entfernung von Trübungen, Verfärbungen oder auch zur Entfernung von Oxidationsbeschleunigern verwendet. Durch die adsorptive Reinigung können Geschmack, Farbe und Lagerstabilität der Öle und Fette wesentlich verbessert werden. Zur Reinigung werden verschiedene Klassen von Bleicherden verwendet. Eine erste Gruppe bildet die Klasse der hochaktiven, meist auf Montmorillonit basierenden Bleicherden (HPBE = high performance bleaching earth). Diese Gruppe umfasst insbesondere säureaktivierte Montmorillonite, wobei die Säureaktivierung in einem aufwändigen Verfahren durch Dealuminieren der Rohtone mit konzentrierten Säuren bei hohen Temperaturen durchgeführt wird. Bei diesem Verfahren wird ein Bleicherdeprodukt mit sehr großer spezifischer Oberfläche und großem Porenvolumen erhalten. Bereits der Einsätz geringer Mengen dieser hochaktiven Bleicherde führt zur merklichen Reinigung der Rohöle. Geringe Einsatzmengen im Bleichprozess sind deswegen erstrebenswert, weil die verbrauchte Bleicherde zum einen Restmengen an Ö1 bindet, wodurch die Ausbeute verringert wird, und zum anderen die gebrauchte Bleicherde, entsprechend geltenden.Vorschriften, entsorgt werden muss.

Nachteilig an diesen hochaktiven Bleicherden ist die Tatsache, dass durch das Dealuminieren mit Säure während der Herstellung große Mengen an sauren salzreichen Abwässern anfallen, die nur in aufwändigen Prozessen aufbereitet oder entsorgt werden können. Die hohen Kosten für die Entsorgung der Abfälle sowie das aufwändige Produktionsverfahren begründen die vergleichsweise hohen Preise solcher hochaktiver Bleicherden.

Eine weitere Gruppe bildet die Klasse der naturaktiven Tone. Diese natürlich vorkommenden Bleicherden werden bereits seit hunderten von Jahren für die Reinigung von Fetten und Ölen verwendet. Diese naturaktiven Systeme (auch Fuller's Earth oder Fuller-Erden genannt) können sehr kostengünstig zur Verfügung gestellt werden. Sie besitzen jedoch nur eine geringe Bleichkraft, so dass sie für die Reinigung von schwer zu bleichenden Ölen und Fetten meist nicht geeignet sind. Ferner müssen im Vergleich zu hochaktiven Bleicherden wesentlich größere Mengen des Adsorbens eingesetzt werden, um das gewünschte Bleichresultat zu erzielen. Dadurch müssen jedoch höhere Verluste an Ö1 bzw. Fett in Kauf genommen werden, da sich die Bleicherden nicht in reiner Form abtrennen lassen und gewissen Mengen an Ö1 bzw. Fett in der Bleicherde verbleiben.

Einen Kompromiss aus niedrigen Herstellkosten und akzeptabler Aktivität stellt die dritte Bleicherdeklasse dar, die sogenannten oberflächenaktivierten Systeme (SMBE = surface modified bleaching earth; oberflächenaktivierte Bleicherden). Hier wird ein naturaktiver Rohton mit geringen Säuremengen beaufschlagt und somit eine "in situ-Aktivierung" erreicht. Für dieses Verfahren haben sich insbesondere Attapulgit und Hormit enthaltende Rohtone bewährt. Diese weisen eine für natürliche Rohtone recht hohe spezifische Oberfläche von ca. 100 bis 180 m²/g und ein Porenvolumen von ca. 0,2 bis 0,35 ml/g auf. Da jedoch bei der Säureaktivierung gebildete Salze oder nicht abreagierte Anteile der Säuren nicht ausgewaschen werden, verbleiben diese auf dem Produkt und werden zumindest teilweise auch in den Poren abgelagert. Dadurch' erreichen diese säureaktivierten Bleicherden in der Regel nicht die gleiche Effizienz, wie sie von hochaktiven Bleicherden (HPBE) erreicht wird, die durch Dealuminieren mit Säure hergestellt werden. Das einfache Herstellungsverfahren ermöglicht jedoch eine vergleichsweise kostengünstige Produktion, da keine sauren Abwässer anfallen.

Aus der US-A-5,008,226 ist ein Verfahren zur Herstellung von säureaktivierter Bleicherde unter Verwendung eines natürlich vorkommenden sauren Attapulgit-Tones gemäß der oben beschriebenen Säureaktivierung bekannt. Dieser Ton weist ein Porenvolumen im Bereich von 0,25 bis 0,50 ml/g und eine spezifische Oberfläche im Bereich von 100 bis 150 m²/g auf. Besonders bevorzugt wird eine natürlich vorkommende Mischung aus Attapulgit und Bentonit verwendet. Die Hauptkomponenten dieses Minerals bestehen aus 71 bis 75 Gew.-% SiO₂ und aus 11 bis 16 Gew.-% Al₂O₃. Das Attapulgit/Bentonit Mineral wird bei einer Temperatur von etwa 25 bis 100°C mit Säure, entsprechend einer Säuremenge von 1 bis 10 Gew.-%, beaufschlagt. Das säureaktivierte Zwischenprodukt wird nicht gewaschen, sondern nach dem Trocknen und Vermahlen direkt als Bleicherde verwendet.

In der US-A-3,029,783 wird ein Verfahren zur Behandlung eines Attapulgit-Tones mit Säure beschrieben. Der Attapulgit enthält ca. 15 Gew.-% Al₂O₃. Der mit Säure aktivierte Ton eignet sich zur Verwendung als Katzenstreu.

Die US-A-5,869,415 beschreibt ein Verfahren zur Aktivierung von Schichtsilicaten mit einer Ionenaustauschkapazität von wenigstens 25 meq/100g durch Aktivierung mit 1 bis 10 Gew.-% Säure und anschließender Calcinierung bei Temperaturen von 200°C bis 400°C. Die Schichtsilicate weisen spezifische Oberflächen im Bereich von 132 bis 167 m²/g sowie ein Porenvolumen im Bereich von 0,27 bis 0,35 ml/g und eine Ionenaustauschkapazität von 38 bis 68 meq/100g auf.

In der WO 99/02256 wird ein Verfahren zur Herstellung einer Bleicherde mit einem erhöhten Säuregehalt beschrieben. Die Aktivierung findet hierbei in einem umweltfreundlichen, weil nicht wässrigen Prozess statt. Bevorzugt werden 2,5 bis 5 Gew.-% Säure in wässriger Lösung auf vorgetrockneten und vermahlenen Rohton aufgegeben. Als Beispiele für geeignete Säuren werden Salz- und Phosphorsäure sowie Zitronensäure beschrieben, die auf einen Rohton aus der Palygorskit-Smektitklasse aufgebracht werden. In der WO 2004/105936 A1 wird ein verfahren zur herstellung einer semi-synthetischen Bleicherde beschrieben

Bei der oben beschriebenen Herstellung säureaktivierter Bleicherden werden also üblicherweise Schichtsilicate, insbesondere Smektite und Palygorskite oder Mischungen dieser Silicate verwendet. Die als Ausgangsprodukte verwendeten Rohtone besitzen spezifische Oberflächen im Bereich von 100 bis 180 m²/g, ein Porenvolumen im Bereich von 0,25 bis 0,50 ml/g und eine Ionenaustauschkapazität im Bereich von 38 bis 68 meq/100g. Diese Schichtsilicate besitzen einen Al₂O₃-Gehalt von > 11 Gew.-%. Wie bereits weiter oben ausgeführt, besitzen oberflächenaktivierte Bleicherden (SMBE) den Vorteil einer kostengünstigen Herstellung. Sie erreichen jedoch nicht die Bleichwirkung, wie sie von hochaktiven Bleicherden (HPBE) erreicht werden. Es sind daher im Vergleich zu den hochaktiven Bleicherden größere Mengen an oberflächenaktivierter Bleicherde notwendig, um ein gewünschtes Bleichergebnis zu erreichen. Dies wiederum bewirkt, dass bei der Bleichung durch Adsorption von Ölen und Fetten in der' Bleicherde höhere Ölverluste hingenommen werden müssen, und andererseits größere Mengen an gebrauchter Bleicherde aufbereitet bzw. entsorgt werden müssen.

Der Erfindung liegt daher als Aufgabe zugrunde, ein Verfahren zur Herstellung eines Adsorptionsmittels zur Verfügung zu stellen, welches die Nachteile des Standes der Technik vermeidet und zu einem Produkt mit hohem Adsorptionsvermögen, insbesondere bezüglich der Bleichwirkung von Ölen und Fetten führt.

Diese Aufgabe wird mit einem Verfahren mit den Merkmalen des Patentanspruchs 1 gelöst. Vorteilhafte Weiterbildungen des Verfahrens sind Gegenstand der abhängigen Unteransprüche.

Es hat sich überraschend gezeigt, dass bei Verwendung der in Anspruch 1 definierten Rohtone durch eine vergleichsweise einfache Aktivierung Adsorptionsmittel bzw. Bleicherden erhältlich sind, deren Aktivität derjenigen hochaktiver, durch intensives Dealuminieren mit starken Säuren erhaltener Bleicherden vergleichbar und zum Teil überlegen ist'.

Dabei ist erfindungswesentlich, dass der eingesetzte Rohton eine spezifische Oberfläche (BET-Fläche) von mehr als 200 m²/g, eine Ionenaustauschkapazität von mehr als 40 meq/100g, sowie ein Porenvolumen von mehr als 0,5 ml/g aufweist, wobei mindestens 40% des Porenvolumens von Poren bereitgestellt werden, die einen Porendurchmesser von mindestens 14 nm aufweisen und höchstens 25 % des Porenvolumens von Poren bereitgestellt werden, die einen Durchmesser von weniger als 7,5 nm aufweisen.

Geeignete analytische Methoden zur Bestimmung der spezifischen Oberfläche, des Porenvolumens und der Ionenaustauschkapazität sind nachstehend bei den Beispielen angegeben.

Bevorzugt werden höchstens 20 %, insbesondere höchstens 15 % des Porenvolumens des Rohtons von Poren bereitgestellt, die einen Porendurchmesser von weniger als 7,5 nm aufweisen. Bevorzugt beträgt der Anteil des Porenvolumens am Gesamtporenvolumen, der von Poren mit einem Porendurchmesser im Bereich von 7,5 bis 14 nm bereitgestellt wird, höchstens 25 %, vorzugsweise höchstens 15 %, insbesondere bevorzugt höchstens 10%. Bevorzugt beträgt der Anteil des Porenvolumens am Gesamtporenvolumen, der von Poren mit einem Porendurchmesser im Bereich von 14 bis 25 nm bereitgestellt wird, höchstens 25 %, vorzugsweise höchstens 20 %, insbesondere höchstens 15 %. Bevorzugt beträgt der Anteil des Porenvolumens am Gesamtporenvolumen, der von Poren mit einem Porendurchmesser im Bereich von 25 bis 80 nm bereitgestellt wird, mindestens 25 %, vorzugsweise mindestens 30 %, insbesondere bevorzugt mindestens 40 %. Bevorzugt beträgt der Anteil des Porenvolumens am Gesamtporenvolumen, der von Poren mit einem Porendurchmesser von zumindest 25 nm bereitgestellt wird, zumindest 30 %; vorzugsweise zumindest 40 %, insbesondere bevorzugt zumindest 50 %, und ganz besonders bevorzugt zumindest 60 %. Bevorzugt beträgt der Anteil des Porenvolumens am Gesamtporenvolumen, der von Poren mit einem Porendurchmesser von mehr als 80 nm bereitgestellt wird, höchstens 30 %, vorzugsweise höchstens 25 %, insbesondere bevorzugt höchstens 25 %. Der im erfindungsgemäßen Verfahren verwendete Rohton besitzt einen hohen Anteil an mittelgroßen bzw. großen Poren. Dies unterscheidet ihn beispielsweise von hochaktiven Bleicherden, die durch Säureauslaugung hergestellt werden. Diese hochaktiven Bleicherden weisen einen höheren Anteil an kleineren Poren auf.

Besonders bevorzugt werden Rohtone verwendet, deren Ionenaustauschkapazität über 50 meq/100g, vorzugsweise im Bereich von 55 bis 75 meq/100g liegt. Vorzugsweise weist der Rohton eine spezifische Oberfläche (BET) im Bereich von 200 bis 280 m²/g, insbesondere bevorzugt im Bereich von 200 bis 260 m²/g auf. Das (Gesamt)Porenvolumen (spezifisches Porenvolumen) des verwendeten Rohtons liegt vorzugsweise im Bereich von 0,7 bis 1,0 ml/ insbesondere im Bereich von 0,80 bis 1,0 ml/.

Bevorzugt weist der im erfindungsgemäßen Verfahren verwendete Rohton einen durch Weinsäure auslaugbaren Anteil an Schwermetallen As, Pb, Cd, Hg von weniger als 25 ppm, vorzugsweise weniger als 15 ppm, insbesondere bevorzugt weniger als 10 ppm auf. Der Anteil an durch Weinsäure auslaugbarem Arsen ist bevorzugt kleiner als 1,5 ppm, vorzugsweise kleiner als 1 ppm. Der Anteil des durch Weinsäure auslaugbaren Bleis ist bevorzugt keiner als 5 ppm, vorzugsweise kleiner als 4 ppm. Der Anteil an durch Weinsäure auslaugbarem Cadmium ist bevorzugt kleiner als 0,5 ppm, vorzugsweise kleiner als 0,3 ppm und der Anteil an durch Weinsäure auslaugbarem Quecksilber ist bevorzugt kleiner als 0,2 ppm, bevorzugt kleiner als 0,1 ppm.

Ein Verfahren zur Bestimmung des Anteils der durch Weinsäure auslaugbaren Schwermetalle ist bei den Beispielen angegeben.

Bevorzugt beträgt das Sedimentvolumen des Rohtons in Wasser weniger als 10 ml/2g, d.h. der Rohton quillt in Gegenwart von Wasser praktisch nicht. Dadurch lässt sich das Bleicherdeprodukt sehr gleichmäßig im Rohöl verteilen und nach dem Bleichprozess durch Filtration auch sehr gut wieder abtrennen.

Um ein Adsorptionsmittel bzw. eine Bleicherde mit den gewünschten Eigenschaften zu erhalten, wird der Rohton einer Aktivierung, insbesondere einer Säureaktivierung unterzogen.

Unter einer Aktivierung wird eine Behandlung des Rohtons verstanden, wie sie bei der Herstellung von SMBE üblich ist. Solche Verfahren sind dem Fachmann an sich bekannt. Sie können in einer thermischen Behandlung oder insbesondere in einer Behandlung mit Säure bestehen. Bei der Aktivierung bleibt die Mineralstruktur des Rohtons vorzugsweise im Wesentlichen unverändert. Die spezifische Oberfläche und das Porenvolumen des Rohtons können je nach Art der Säureaktivierung erfahrungsgemäß um bis zu etwa 20% abnehmen.

Beim erfindungsgemäßen Verfahren wird zunächst ein getrockneter Rohton bereitgestellt. Unter Rohton wird im Rahmen der vorliegenden Erfindung ein naturaktives oder nicht naturaktives Tonmaterial verstanden, wobei auch durch herkömmliche, mechanische oder chemische Aufarbeitungsschritte weiterverarbeitete, jedoch in Abgrenzung zu den Bleicherden, nicht in einem (gesonderten) Aktivierungsschritt aktivierte Tonmaterialien erfasst sein sollen. Unter Aktivierung des Rohtones ist dabei eine Behandlung zu verstehen, die zu einer Verbesserung der Bleichwirkung führt, insbesondere bei der Bleichung von Ölen und Fetten, wie sie anhand der Farbzahlen in Ölen (Lovibond-Farbzahlen) gemäß AOCS Cc 13b-45 und/oder der Chlorophyll A-Bestimmung gemäß AOCS Cc 13d-55 ermittelt wird.

Entsprechend wird unter Bleicherden im Sinne der vorliegenden Erfindung ein (in einem Aktivierungsschritt) aktiviertes, insbesondere durch thermische und/oder Säurebehandlung aktiviertes Tonmaterial verstanden. Der Begriff Bleicherde ist dem Fachmann geläufig und umfasst aktivierte Tonmaterialien, die aufgrund ihrer Adsorptions- bzw. Bleichaktivität zur Reinigung insbesondere von Speiseölen und -fetten verwendet werden können.

Insbesondere werden vorliegend unter Rohtonen natürlich vorkommende naturaktive oder nicht naturaktive Tonmaterialien verstanden, die noch keiner chemischen Modifikation unterworfen wurden, z.B. noch nicht mit starken Säuren belegt oder dealuminiert wurden. Vor der Aktivierung können die Rohtone ggf. getrocknet und gemahlen werden.

Es werden Rohtone verwendet, deren Aluminiumgehalt, bezogen auf den wasserfreien Rohton und berechnet als Al₂O₃, weniger als 11 Gew.-% beträgt.

Besonders bevorzugt werden Rohtone verwendet, welche nur eine geringe Kristallinität aufweisen, also an sich nicht der Klasse der Schichtsilicate zugeordnet werden. Die geringe Kristallinität lässt sich beispielsweise durch Röntgendiffraktometrie feststellen. Die besonders bevorzugten Rohtone sind dabei weitgehend röntgenamorph, sie gehören daher nicht der Klasse der Attapulgite oder Smektite an.

Der im erfindungsgemäßen Verfahren eingesetzte Rohton weist eine im Vergleich zu herkömmlichen hochaktiven Bleicherden unterschiedliche Porenverteilung auf. Bei hochaktiven Bleicherden wird das Porenvolumen im Wesentlichen von Poren mit kleinem Durchmesser gebildet. Die Poren weisen im Wesentlichen einen Durchmesser im Bereich von 2 bis 14 nm auf. Im Gegensatz dazu wird beim im erfindungsgemäßen Verfahren verwendeten Rohton der wesentliche Anteil des Porenvolumens von Poren gebildet, die einen wesentlich größeren Durchmesser aufweisen.

Charakteristisch für die erfindungsgemäß verwendeten Rohtone ist, dass mindestens 40% des Gesamtporenvolumens (bestimmt gemäß der BJH-Methode, vgl. unten) von Poren gebildet werden, die einen Porendurchmesser von mehr als 14 nm aufweisen. Bevorzugt werden mehr als 50%, und insbesondere bevorzugt mehr als 60% des Gesamtporenvolumens von Poren gebildet, die einen Durchmesser von mehr als 14 nm aufweisen. Das Gesamtporenvolumen dieser Rohtone beträgt, wie bereits erläutert, mehr als 0,5 ml/g. Die Porenradienverteilung bzw. das Gesamtporenvolumen wird durch Stickstoffporosimetrie (DIN 66131) und Auswertung der Adsorptionsisotherme nach der BJH-Methode (vgl. unten) bestimmt.

Es wurde gefunden, dass Rohtone mit den oben beschriebenen Eigenschaften selbst durch eine Aktivierung mit geringen Säuremengen wie z.B. bei der vorstehend erwähnten "in situ-Aktivierung" in Bleicherdeprodukte umgewandelt werden können, die überraschend gute Bleicheigenschaften aufweisen. Die Bleichwirkung dieser Bleicherdeprodukte erreicht die Ergebnisse von hochaktiven Bleicherden bzw. übertrifft diese sogar. Unter einer "in situ-Aktivierung" wird eine Aktivierungsbehandlung des Rohtones verstanden, wie sie bei den oben beschriebenen säureaktivierten Bleicherden (SMBE) üblich ist.

Allgemein kann die erfindungsgemäße Aktivierung der Rohtone durch eine Behandlung mit Säure durchgeführt werden. Dazu werden die Rohtone mit einer anorganischen oder organischen Säure in Kontakt gebracht. Im Prinzip kann dabei jedes dem Fachmann geläufige Verfahren zur Säureaktivierung von Tonen verwendet werden, einschließlich der in der WO 99/02256, der US-5,008,226, und der US-5,869,415 beschriebenen Verfahren.

Nach einer bevorzugten erfindungsgemäßen Ausführungsform ist es nicht erforderlich, dass die überschüssige Säure und die bei der

Aktivierung entstehenden Salze ausgewaschen werden. Vielmehr wird nach Aufgabe der Säure, wie bei der Säureaktivierung üblich, kein Waschschritt durchgeführt, sondern der behandelte Rohton getrocknet und dann auf die gewünschte Korngröße vermahlen. Beim Vermahlen wird meist eine typische Bleicherdefeinheit eingestellt. Dabei liegt der Trockensiebrückstand auf einem Sieb mit einer Maschenweite von 63 µm im Bereich von 20 bis 40 Gew.%. Der Trockensiebrückstand auf einem Sieb mit einer Maschenweite von 25 µm liegt im Bereich von 50 bis 65 Gew.-%.

Bei einer Ausführungsform des erfindungsgemäßen Verfahrens wird die Aktivierung des Rohtons in wässriger Phase durchgeführt. Dazu wird die Säure als wässrige Lösung mit dem Rohton in Kontakt gebracht. Es kann dabei so vorgegangen werden, dass zunächst der Rohton, welcher vorzugsweise in Form eines Pulvers bereitgestellt wird, in Wasser aufgeschlämmt wird. Anschließend wird die Säure in konzentrierter Form zugegeben. Der Rohton kann jedoch auch direkt in einer wässrigen Lösung der Säure aufgeschlämmt werden, oder die wässrige Lösung der Säure auf den Rohton aufgegeben werden. Nach einer vorteilhaften Ausführungsform kann die wässrige Säurelösung beispielsweise auf einen vorzugsweise gebrochenen oder pulverförmigen Rohton aufgesprüht werden, wobei die Wassermenge bevorzugt möglichst gering gewählt wird und z.B. eine konzentrierte Säure bzw. Säurelösung eingesetzt wird. Die Säuremenge kann vorzugsweise zwischen 1 und 10 Gew.-%, besonders bevorzugt zwischen 2 und 6 Gew.-% einer starken Säure, insbesondere einer Mineralsäure wie Schwefelsäure, bezogen auf den wasserfreien Rohton (atro), gewählt werden. Soweit erforderlich, kann überschüssiges Wasser abgedampft werden und der aktivierte Rohton dann bis zur gewünschten Feinheit gemahlen werden. Wie bereits oben erläutert, ist auch bei dieser Ausführungsform des erfindungsgemäßen Verfahrens kein Waschschritt erforderlich. Nach Aufgabe der wässrigen Lösung der Säure wird lediglich, soweit erforderlich, bis zum Erreichen des gewünschten Feuchtigkeitsgehalts getrocknet. Meist wird der Wassergehalt des erhaltenen Bleicherdeprodukts auf einen Anteil von weniger als 20 Gew.-%, bevorzugt weniger als 10 Gew.-% eingestellt.

Für die oben beschriebene Aktivierung mit einer wässrigen Lösung einer Säure bzw. einer konzentrierten Säure kann die Säure an sich beliebig gewählt werden. Es können sowohl Mineralsäuren, als auch organische Säuren oder Gemische der vorstehenden Säuren verwendet werden. Es können übliche Mineralsäuren verwendet werden, wie Salzsäure, Phosphorsäure oder Schwefelsäure, wobei Schwefelsäure bevorzugt ist. Es können konzentrierte oder verdünnte Säuren bzw. Säurelösungen verwendet werden. Als organische Säuren können Lösungen von z.B. Zitronensäure oder Oxalsäure verwendet werden. Bevorzugt ist Zitronensäure.

Die Korngröße bzw. die mittlere Korngröße des erfindungsgemäßen Adsorptionsmittels sollte vorzugsweise so gewählt werden, dass bei einer späteren Verwendung des aktivierten Rohtones bzw. der Bleicherde eine vollständige und einfache Abtrennung des Tons vom raffinierten Produkt ermöglicht wird. Vorzugsweise ist die mittlere Korngröße des pulverförmigen Rohtons in einem Bereich von 10 bis 63 µm gewählt. Typischerweise wird die Feinheit so gewählt, dass auf einem Sieb mit einer Maschenweite von 63 µm etwa 20 bis 40 Gew.-% der Mischung zurückbleiben (Siebrückstand) und auf einem Sieb mit einer Maschenweite von 25 µm etwa 50 bis 65 Gew.-% der Mischung zurückbleiben. Dies kann als typische Bleicherdefeinheit bezeichnet werden.

Wie bereits erläutert, können mit dem erfindungsgemäßen Verfahren auf einfache und kostengünstige Weise Adsorptionsmittel und Bleicherdeprodukte zur Verfügung gestellt werden, deren Adsorptions- bzw. Bleichaktivität überraschend hoch ist und in einiger Hinsicht über der Aktivität herkömmlicher hochaktiver Bleicherden liegt.

Mit dem oben beschriebenen Verfahren wird ein Adsorptionsmittel, insbesondere ein Bleicherdeprodukt, erhältlich, welches kostengünstig hergestellt werden kann, da beispielsweise keine Abfallprodukte entstehen, die aufwändig entsorgt werden müssen. Durch ihre hohe Bleichaktivität ermöglichen es die erfindungsgemäßen Adsorptionsmittel die Mengen, welche für die Raffination von beispielsweise Ölen und Fetten erforderlich sind, wesentlich zu reduzieren. Als Folge davon können auch die Verluste an Ausgangsprodukt wie Öle und Fette, welche beim Abtrennen des Adsorptionsmittels in diesem verbleiben, wesentlich reduziert werden.

Das mit dem erfindungs gemäßen verfahren erhalten Adsorptionsmittel kann als Bleicherde verwendet werden. Besonders bevorzugt kann das oben beschriebene Adsorptionsmittel dabei zur Raffination von Ölen und Fetten verwendet werden, insbesondere zur Raffination von Pflanzenölen. Weiter kann das erfindungsgemäße Adsorptionsmittel auch als Trockenmittel oder für die Adsorption von Gasen verwendet werden.

Der für die Herstellung des erfindungsgemäßen Adsorptionsmittels verwendete Rohton weist bereits selbst vorteilhafte Eigenschaften auf, wie seine leichte und hohe Aktivierbarkeit mit Säure. Die spezifische Oberfläche (BET-Fläche) und das spezifische Porenvolumen wird mit Hilfe der Stickstoffporosimetrie gemäß DIN 66131 ermittelt. Die spezifische Oberfläche liegt bevorzugt im Bereich von 200 bis 270 m²/g, insbesondere bevorzugt im Bereich von 200 bis 260 m²/g. Das spezifische Porenvolumen beträgt vorzugsweise 0,5 bis 1,0 ml/g, insbesondere bevorzugt 0,7 bis 1,0 ml/g. Die Ionenaustauschkapazität wird mit dem nachstehend bei den Beispielen beschriebenen Verfahren bestimmt. Sie beträgt vorzugsweise mehr als 50 meq/100g und liegt insbesondere bevorzugt im Bereich von 55 bis 75 meq/100g. Eine Aufschlämmung von 10 Gew.-% des Rohtons in Wasser weist vorzugsweise einen pH-Wert im Bereich von 5,5 bis 8,5, vorzugsweise 5,9 bis 8,2 auf. Der pH-Wert wird mit einer pH-Elektrode bestimmt.

Wie bereits erläutert, weist der Rohton eine charakteristische Verteilung der Porenradien auf. Zumindest 40% des Porenvolumens wird durch Poren mit einem Durchmesser von mehr als 14 nm erbracht. Vorzugsweise werden zumindest 50% des Porenvolumens, insbesondere bevorzugt zumindest 60% des Porenvolumens von Poren mit einem Durchmesser von zumindest 14 nm erbracht. Die Porengröße bzw. die Porengrößenverteilung lässt sich durch Stickstoffporosimetrie gemäß DIN 66131 und Auswertung mittels der BJH-Methode ermitteln. Das Gesamtporenvolumen bezieht sich auf Poren mit einem Durchmesser von 2 bis 130 nm. Das Tonprodukt besteht bevorzugt zu mindestens 98 %, insbesondere bevorzugt zu 100% aus Rohton. Besonders bevorzugte Werte des Rohtons bzw. des Tonprodukts zur Porosimetrie, zum Sedimentvolumen und zum Gehalt an mit Weinsäure auslaugbaren Metallen wurden vorstehend bereits angegeben.

Ferner betrifft die Erfindung ein Verfahren zur Raffination von Fetten und/oder Ölen, gemäß Auspruch 9

Mit dem im erfindungsgemäßen Verfahren verwendeten Bleicherdeprodukt kann eine deutliche Erniedrigung der Lovibond-Farbzahl und gleichzeitig eine deutliche Verringerung des Gehaltes an Phosphor und Eisen erreicht werden. Das erfindungsgemäße Verfahren ermöglicht daher eine rasche und einfache Raffination von Ölen und Fetten.

Gewöhnlich werden bei der Raffination von Ölen die Rohöle zunächst einer Entschleimung unterzogen, um Schleimstoffe aus dem Öl zu entfernen. Dazu wird das Öl bei Temperaturen im Bereich von 70 bis 80°C mit Wasser behandelt, wobei es für etwa 10 bis 20 Minuten bei Normaldruck gerührt wird. Nach dem Abtrennen der Schleimstoffe, beispielsweise mittels einer Zentrifuge, folgt eine Säureentschleimung, wobei das vorentschleimte Öl mit Säure, insbesondere Phosphorsäure oder Zitronensäure bei Temperaturen im Bereich von 70 bis 100 °C bei Normaldruck behandelt wird. Die Abtrennung der Schleimstoffe erfolgt zusammen mit der wässrigen Phase, beispielsweise durch Zentrifugation. Bei der Säureentschleimung kann zum Ende der Behandlungszeit noch Wasser, meist in Mengen von 1 - 2 Gew.-%, bezogen auf das Rohöl, zugegeben werden, um den Wirkungsgrad der Entschleimung zu verbessern.

Bei der Bleichung kann so vorgegangen werden, dass zunächst eine Nassbleichung durchgeführt wird, bei welcher das entschleimte Öl mit der Bleicherde und Wasser versetzt wird und dann das Gemisch bei Atmosphärendruck und einer Temperatur zwischen etwa 80 und 100 °C gerührt wird. Nach der Nassbleichung wird der Druck erniedrigt, die Bleichung bei einem Druck im Bereich von etwa 100 mbar fortgesetzt und die Temperatur ggf. auf den gewünschten Wert, beispielsweise eine Temperatur im Bereich von 90 bis 120 °C, erhöht.

Beim erfindungsgemäßen Verfahren kann unter bestimmten Voraussetzungen auf die Säureentschleimung sowie eine Nassbleichung verzichtet werden und nach Zugabe des Bleicherdeprodukts unmittelbar mit der Vakuumbleichung begonnen werden.

Diese rationalisierte Raffination ist insbesondere für Öle geeignet, die einen Phosphorgehalt, insbesondere Phosphorlipidgehalt, von weniger als 100 ppm, bevorzugt weniger als 50 ppm aufweisen. Der Phosphorgehalt lässt sich beispielsweise durch Elementaranalyse bestimmen.

Insbesondere eignet sich das erfindungsgemäße Verfahren für die Raffination von Palmöl.

Die Erfindung wird anhand von Beispielen sowie unter Bezugnahme auf eine beigefügte Figur näher erläutert. Dabei zeigt:

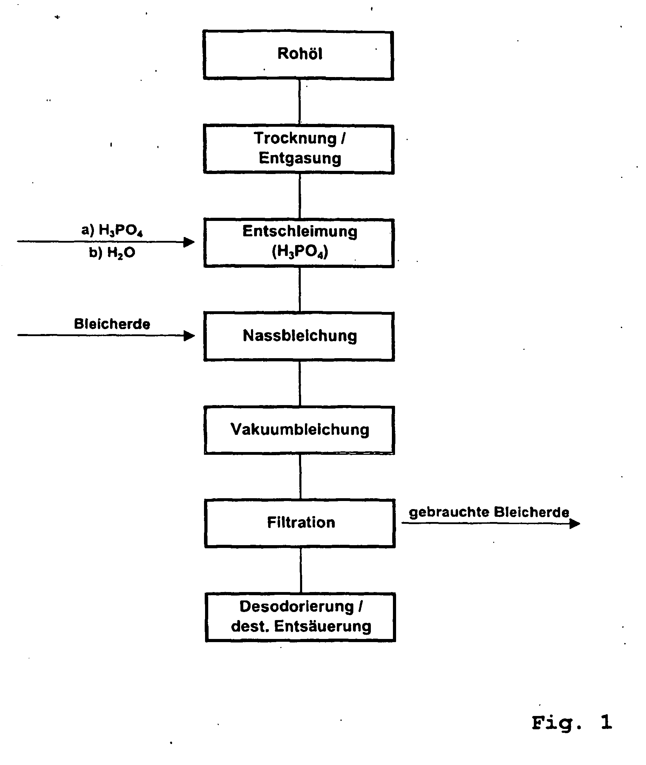

Fig. 1: ein schematisches Prozessdiagramm zur physikalischen Raffination von Ölen, insbesondere Palmöl.

Rohes Speiseöl, beispielsweise Palmöl, wird nach dem Prinzip der physikalischen Raffination üblicherweise nach einem Verfahren raffiniert, wie es schematisch in Fig. 1 wiedergegeben ist. Das Rohöl, welches beispielsweise durch Pressen entsprechender Pflanzensamen in einer Ölmühle gewonnen wurde, wird im Fall von Palmöl zunächst einer Trocknung und Entgasung unterworfen, um beispielsweise gelösten Sauerstoff aus dem Öl zu entfernen. Das Rohöl wird einer Entschleimungsstufe zugeführt, in welcher die Schleimstoffe, insbesondere Phospholipide, abgetrennt werden. Die Entschleimung kann eine Vorentschleimung sowie eine Säureentschleimung umfassen. Bei der Vorentschleimung wird Wasser zum Rohöl gegeben und die Mischung bei etwa 70 bis 80 °C bei Normaldruck gerührt. Die wässrige Lecithin-Phase wird anschließend abgetrennt. Das Rohöl hat nach der Vorentschleimung einen Phosphorgehalt im Bereich von etwa 100 - 200 ppm. Bei der Säureentschleimung wird das vorentschleimte Öl mit einer Säure versetzt und bei etwa 70 bis 100 °C bei Normaldruck gerührt. Geeignete Säuren sind beispielsweise Phosphorsäure und Zitronensäure. Beispielhafte Bedingungen sind eine Säuremenge von 0,06 Gew.-% einer 50 %-igen Phosphorsäure, eine Behandlungstemperatur von etwa 95 °C und eine Behandlungsdauer von etwa 15 Minuten. Zum Ende der Säureentschleimung kann noch Wasser zugegeben werden, wobei die Wassermenge bei etwa 0,2 Gew.-% gewählt wird, um die Abtrennung der Schleimstoffe zu erleichtern. Die wässrige Phase wird anschließend abgetrennt, beispielsweise durch eine Zentrifugation. Nach der Säureentschleimung weist das Öl einen Phosphorgehalt im Bereich von etwa 10 bis 20 ppm auf. Die Entschleimung ist notwendig, um in Kombination mit der nachfolgenden Bleichung den Anteil der im Öl enthaltenen Phospholipide (Schleimstoffe) sowie der Metalle zu reduzieren. Wird auf die Entschleimung verzichtet, so sind die Gehalte an Phosphor und Eisen selbst bei ausreichend niedrigen Lovibond-Farbzahlen rot / gelb im raffinierten Öl zu hoch. Nach der Entschleimung kann das Öl ggf. getrocknet und entgast werden. Für phosphorarme Rohöle, wie zum Beispiel Palmöl, kann ggf. auf die Säureentschleimung verzichtet werden und direkt die Bleichung durchgeführt werden.

An die Entschleimung schließt sich eine Bleichung des Öls an, wobei zunächst eine Nassbleichung und anschließend eine Vakuumbleichung durchgeführt wird. Bei der Nassbleichung wird das Öl mit Wasser und Bleicherde versetzt, wobei Mengen im Bereich von etwa 0,1 bis 0,5 Gew.-% für Wasser und 0,3 bis 2,0 Gew.-% für Bleicherde gewählt werden. Das Öl wird bei Normaldruck auf etwa 80 bis 100 °C erhitzt und etwa 20 Minuten gerührt. Anschließend wird Vakuum (Beispielsweise 100 mbar) angelegt und das Öl für weitere 30 Minuten bei etwa 90 bis 120 °C gerührt. Das Öl wird anschließend filtriert, beispielsweise über eine mit einem Papierfilter belegte Filternutsche. Die Filtration wird bei einer Temperatur von etwa 80 °C durchgeführt.

Nach der Bleichung wird das Öl noch desodoriert. Dazu wird überhitzter Wasserdampf, der eine Austrittstemperatur von etwa 240 bis 260 °C aufweist, durch das Öl geleitet, um freie Fettsäuren sowie unangenehme Geschmacks- und Geruchsstoffe zu entfernen. Die Desodorierung wird im Vakuum durchgeführt bei einem Druck im Bereich von weniger als 5 mbar, vorzugsweise 1 bis 3 mbar.

Nach der Raffination weist das Öl einen Phosphorgehalt von weniger als 3 ppm und einen Eisengehalt von weniger als 0,1 ppm auf.

Beim erfindungsgemäßen Verfahren wird die Raffination des Rohöls in der oben beschriebenen Weise durchgeführt, wobei jedoch ein spezielles Tonprodukt als Adsorptionsmittel bzw. Bleichmittel, insbesondere bei der Bleichung verwendet wird. Bei Ölen, die einen Phosphorgehalt von weniger als etwa 80 ppm, vorzugsweise weniger als 50 ppm aufweisen, kann auf den Entschleimungsschritt verzichtet werden und, ggf. nach Trocknung und Entgasung des Rohöls, direkt eine Bleichung des Öls vorgenommen werden.

### Beispiele:

Die Erfindung wird im Weiteren an Hand von Beispielen weiter erläutert.

Es wurden die folgenden Analysenmethoden angewendet:

### Oberfläche/Porenvolumen:

Die spezifische Oberfläche wurde an einem vollautomatischen Stickstoffporosimeter der Firma Micromeritics, Typ ASAP 2010, gemäß DIN 66131 durchgeführt. Das Porenvolumen wurde unter Anwendung der BJH Methode ermittelt (E.P Barrett, L.G. Joyner, P.P. Haienda, J. Am. Chem. Soc. 73 (1951) 373). Porenvolumina bestimmter Porengrößenbereiche werden durch Aufsummieren inkrementeller Porenvolumina bestimmt, die aus der Auswertung der Adsorptionsisotherme nach BJH erhalten werden. Das Gesamtporenvolumen nach der BJH-Methode bezieht sich auf Poren mit einem Durchmesser von 2 bis 130 nm.

### Öl-Analytik:

Die farbzahlen in Ölen (Lovibond-Farbzahlen) wurden gemäß AOCS Cc 13b-45 bestimmt. Die Chlorophyll A-Bestimmung erfolgte nach AOCS Cc 13d-55.

### Wassergehalt:

Der Wassergehalt der Produkte bei 105°C wurde unter Verwendung der Methode DIN/ISO-787/2 ermittelt.

### Silicatanalyse:

Diese Analyse beruht auf dem Totalaufschluss des Rohtons bzw. des entsprechenden Produktes. Nach dem Auflösen der Feststoffe werden die Einzelkomponenten mit herkömmlichen spezifischen Analysenmethoden, wie z.B. ICP, analysiert und quantifiziert.

### Ionenaustauschkapazität:

Zur Bestimmung der Ionenaustauschkapazität (IUF) wurde der zu untersuchende Rohton über einen Zeitraum von zwei Stunden bei 105°C getrocknet. Danach wurde das getrocknete Material mit einem Überschuss an wässriger 2N NH₄Cl-Lösung eine Stunde unter Rückfluss zur Reaktion gebracht. Nach einer Standzeit von 16 Stunden bei Raumtemperatur wurde filtriert, worauf der Filterkuchen gewaschen, getrocknet und vermahlen wurde und der NH₄-Gehalt im Rohton durch Stickstoffbestimmung (CHN-Analysator der Fa. Leco) nach den Herstellerangaben ermittelt wurde. Der Anteil und die Art der ausgetauschten Metallionen wurde im Filtrat durch ICP-Spektroskopie bestimmt.

### Röntgendiffraktometrie:

Die Röntgenaufnahmen werden an einem hochauflösenden Pulverdiffraktometer der Fa. Phillips (X'-Pert-MPD (PW 3040)) erstellt, das mit einer Cu-Anode ausgerüstet war.

### Bestimmung des Sedimentvolumens

Ein graduierter 100 ml Messzylinder wird mit 100 ml destilliertem Wasser bzw. einer wässrigen Lösung aus 1 % Soda und 2 % Trinatriumpolyphosphat gefüllt. 2 g der zu vermessenden Substanz werden langsam und portionsweise, je etwa 0,1, bis 0,2 g, mit einem Spatel auf die Oberfläche des Wassers gegeben. Nach dem Absinken einer zugegebenen Portion wird die nächste Portion zugegeben. Nachdem die 2 g Substanz zugegeben und auf den Grund des Messzylinders abgesunken sind, wird der Zylinder für eine Stunde bei Raumtemperatur stehen gelassen. Anschließend wird an der Graduierung des Messzylinders die Höhe des Sedimentvolumens in ml/2g abgelesen.

### Bestimmung der Volumenzunahme des Sedimentvolumens (Quellvermögen)

Der wie oben beschrieben zur Bestimmung des Sedimentvolumens verwendete Probenansatz wird mit Parafilm^{®} verschlossen und für drei Tage bei Raumtemperatur erschütterungsfrei stehen gelassen. Danach wird an der Graduierung des Messzylinders das Sedimentvolumen abgelesen. Die Zunahme des Sedimentvolumens ergibt sich aus der Differenz des Sedimentvolumens zu Beginn der Messung und nach einer Standzeit von drei Tagen.

### Bestimmung des Trockensiebrückstandes

Etwa 50 g des zu untersuchenden lufttrockenen Minerals werden auf einem Sieb der Maschenweite 45 µm eingewogen. Das Sieb wird an einen Staubsauger angeschlossen, der über ein unter dem Siebboden kreisenden Saugschlitz alle Anteile, die feiner als das Sieb sind, durch das Sieb heraussaugt. Das Sieb wird mit einem Plastikdeckel abgedeckt und der Staubsauger eingeschaltet. Nach 5 Minuten wird der Staubsauger abgeschaltet und die Menge der auf dem Sieb verbliebenen gröberen Anteile durch Differenzwägung ermittelt.

### Glühverlust:

In einem geglühten gewogenen Porzellantiegel mit Deckel wird ca. 1 g getrocknete Probe auf 0,1 mg genau eingewogen und 2 h lang bei 1000 °C im Muffelofen geglüht. Danach wird der Tiegel im Exsikkator abgekühlt und ausgewogen.

### Beispiel 1

### Charakterisierung des Rohtons

Ein für das erfindungsgemäße Verfahren geeigneter Rohton (Süd-Chemie AG, Moosburg DE, Rohtonlager Ref. No.: 05041) wurde hinsichtlich seiner physikalisch-chemischen Eigenschaften untersucht. Die hierbei erzielten Ergebnisse sind in Tabellen I bis III zusammengefasst.

**Tabelle I**

| Physikalisch-chemische Analyse des Rohtons | | |
|---|---|---|
| Spezifische Oberfläche (BET) (m²/g) | | 213 |
| Porenvolumen | (ml/g) | 0,85 |
| Kationenäustauschkapazität (meq/100g) | | 54 |
| Sedimentvolumen in Wasser (ml/2g) | | <10 |
| Silicatanalyse: | | |
| SiO₂ | (Gew.-%) | 70,9 |
| Fe₂O₃ | (Gew.-%) | 2,7 |
| Al₂O₃ | (Gew.-%) | 9,6 |
| CaO | (Gew.-%) | 1,4 |
| MgO | (Gew.-%) | 4,3 |
| Na₂O | (Gew.-%) | 0,36 |
| K₂O . | (Gew.-%) | 1,3 |
| TiO₂ | (Gew.-%) | 0,20 |
| Glühverlust (2h 1000°C) | | 7,7 |
| **Summe** | **(Gew.-%)** | **98,46** |

### Metallauslaugung in Weinsäure

2,5 g des in Tabelle I charakterisierten Tonmaterials (lufttrocken) werden in einem 250 ml Messkolben eingewogen und dieser bis zur Eichmarke mit 1 %-iger Weinsäurelösung aufgefüllt. Der Messkolben wird 24 Stunden bei Raumtemperatur stehen gelassen und dann der Kolbeninhalt über ein Faltenfilter filtriert. Im Filtrat werden die in Tabelle II angegebenen Werte mittels AAS bestimmt. Zum Vergleich sind auch die Grenzwerte nach dem deutschen Weingesetz mit aufgenommen.

**Tabelle II:**

| Metallauslaugung in Weinsäure | | |
|---|---|---|
| | In Weinsäure | |
| As (ppm) | < 1 | |
| Pb (ppm) | 3 | |
| Cd (ppm) | 0,1 | |
| Hg (ppm) | < 0,1 | |
| Ca (%) | 0,92 | |
| Fe (%) | 0,07 . | |
| Mg (%) | 0,22 | |
| Na (%) | 0,04 | |

Die Daten zeigen'eine sehr geringe Metallauslaugung des Tonmaterials. Insbesondere enthält das Tonmaterial nur sehr geringe Mengen an auslaugbaren Schwermetallen.

Weiter wurde das in Tabelle I charakterisierte Tonmaterial auf den Anteil am Porenvolumen untersucht, der von Poren mit bestimmten Radien gebildet wird. Die entsprechenden Daten sind in Tabelle III a bis c zusammengefasst.

**Tabelle IIIa**

| Relative Anteile der Poren am Porenvolumen | | | | | |
|---|---|---|---|---|---|
| Bereich | 0 - 75 Å | 0 - 140 Å | 0 - 250 Å | 0 - 800 Å | > 800 Å |
| Anteil (%) | 10,3 | 19,3 | 34,1 | 78,0 | 22,0 |

**Tabelle IIIb**

| Relative Anteile der Poren am Porenvolumen | | | | | |
|---|---|---|---|---|---|
| Bereich | 0 - 75 Å | 75 - 140 Å | 140 - 250 Å | 250 - 800 Å | > 800 Å |
| Anteil (%) | 10,3 | 9,0 | 14,8 | 43,9 | 22,0 |

**Tabelle IIIc**

| Relative Anteile der Poren am Porenvolumen | | | | | | |
|---|---|---|---|---|---|---|
| Bereich | 0 - 75 Å | 75 - 800 Å | > 75 Å | > 140 Å | > 250 Å | > 800 Å |
| Anteil (%) | 10,3 | 67,7 | 89, 7 | 80,7 | 65,9 | 22,0 |

### Beispiel 2

### Aktivierung des Rohtons mit Schwefelsäure

Der in Beispiel 1 charakterisierte Rohton wurde mit Wasser vermischt und anschließend mit 3 Gew.-% H₂SO₄ aktiviert. Hierzu wurden 100 g auf 9,3% H₂O getrocknetes Pulver mit 208 g Wasser und 2,83 g H₂SO₄ (96%-ig) in einem Becherglas innig vermengt. Das entstehende Gemisch wurde bei 110°C auf einen Wassergehalt von 9,4% getrocknet und anschließend auf eine typische Bleicherdefeinheit vermahlen (Trockensiebrückstand auf 63 µm Sieb: 20 bis 40 Gew.-%; Trockensiebrückstand auf 25 µm Sieb: 50 bis 65 Gew.-%.

### Vergleichsbeispiel 1

### Schwefelsäure-Aktivierung von saurem Attapulgit/ Bentonit zur Herstellung einer Bleicherde gemäß US-A-5,008,226

Eine natürlich vorkommende saure Mischung aus Attapulgit und Bentonit aus dem Gebiet von Georgia/USA wurde auf 15 bis 20 Gew.-% H₂O vorgetrocknet, über eine Rotorschlagmühle vermahlen und anschließend auf einen Wassergehalt von 8 Gew.-% getrocknet. 100 g des resultierenden Pulvers wurden mit 309 g Wasser und 2,88 g H₂SO₄ (96%-ig) in einem Becherglas innig vermengt. Das erhaltene Gemisch wurde bei 110° C auf einen Wassergehalt von 9 Gew.-% getrocknet und anschließend auf eine typische Bleicherdefeinheit vermahlen. (Trockensiebrückstand auf 63µm Sieb: 20 bis 40 Ges.-%; Trockensiebrückstand auf 25 µm Sieb: 50 bis 65 Gew.-%).

### Vergleichsbeispiel 2

### Referenz-Bleicherden nach dem Stand der Technik

Als Referenz für die durch Dealuminieren mit Säure zugänglichen höchstaktiven Bleicherden (HPBE) wurden die kommerziell erhältlichen Bleicherden Tonsil Optimum 210 FF und Tonsil Supreme 110 FF (Fa. Süd-Chemie AG) ausgewählt. Beide Produkte werden durch Dealuminieren von Montmorillonittonen mit Salzsäure hergestellt.

Als Beispiele für herkömmliche oberflächenaktivierte Bleicherden (SMBE) wurde ein kommerzielles Produkt der Fa. Oil-Dri Supreme Pro Active verwendet.

### Beispiel 3

### Bleichung von Raps- und Sojaöl

Ein entschleimtes und entsäuertes Rapsöl bzw. Sojaöl wurde mit 0,30 bzw. 0,73 Gew.-% Bleicherde bei 110°C bzw. 100°C 30 Minuten unter einem Druck von 30 mbar gebleicht. Anschließend wurde die Bleicherde.abfiltriert und die Farbzahlen des Öls mit Hilfe der Lovibond-Methode in einer 5¼" Küvette bestimmt. Ein Teil dieses Öls wurde zusätzlich durch Wasserdampfbehandlung desodoriert (30 Minuten, 240°C, < 1 mbar). Auch das hierbei erhaltene Öl wurde mit Hilfe der Lovibond-Methode analysiert. Die Tabellen IV und V geben die Ergebnisse der Bleichungen wieder.

**Tabelle IV**

| Bleichung von Rapsöl | | | | |
|---|---|---|---|---|
| **Probe** | **Bleichung** | | **Desodorierung** | |
| | FZ rot (5 | Chlorophyll | FZ rot (5 | Chlorophyll |
| | ¼") | A (ppm) | ¼") | Å (ppm) |
| Tonsil Supreme 110F | 1,7 | 0,03 | 0, 7 | 0,02 |
| Tonsil Optimum 210 FF | 2, 6 | 0,09 | 1,0 | 0,9 |
| Tonsil Standard 3141 | 3,6 | 0,18 | 1,2 | 0,17 |
| FF | | | | |
| OD Supreme Pro-Active | 3,2 | 0,14 | 1,3 | 0,15 |
| Vergleichsbeispiel 1 | 3, 4 | 0, 13 | 1, 3 | 0,16 |
| Beispiel 2 | 2,2 | 0,02 | 0,55 | 0,01 |

**Tabelle V**

| Bleichung von Sojaöl | | | | |
|---|---|---|---|---|
| **Probe** | **Bleichung** | | **Desodorierung** | |
| | FZ rot (5 | Chlorophyll | FZ rot (5 | Chlorophyll |
| | ¼") | A (ppm) | ¼") | A (ppm) |
| Tonsil Supreme 110F | 2,7 | 0, 07 | 0,9 | 0,06 |
| Tonsil Optimum 210 FF | 3 , 6 | 0,11 | 1,0 | 0,10 |
| Tonsil Standard 3141 | 6,3 | 0,19 | 1,1 | 0,15 |
| FF | | | | |
| OD Supreme Pro-Active | 4, 5 | 0,15 | 1,2 | 0,16 |
| Vergleichsbeispiel 1 | 4,6 | 0,22 | 1, 3 | 0 , 2 0 |
| Beispiel 2 | 4 , 5 | 0, 08 | 0, 7 | 0,08 |

Wie Tabellen IV und V deutlich zeigen, wird mit der erfindunggemäßen Bleicherde nach Beispiel 2 eine außerordentlich gute Entfärbung des Öles (Farbzahl rot und Chlorophyll A) erreicht. Die Werte nach der Desodorierung sind hierbei von besonderer Relevanz, da in der Praxis fast alle Öle nach der Bleichung desodoriert werden. Die Reinigungsleistung der erfindungsgemäßen Bleicherden liegt im Bereich bzw. besser als die höchstaktiven Bleicherden und deutlich über den Ergebnissen der oberflächenaktivierten Bleicherden nach dem Stand der Technik.

### Beispiel 4

### Bleichung von Palmöl

Für die Durchführung der Raffinationsversuche wurden zwei unterschiedliche Palmöle verwendet, deren Eigenschaften in Tabelle VI zusammengefasst sind.

**Tabelle VI**

| Eigenschaften der rohen Palmöle | | | |
|---|---|---|---|
| | | Palmöl A | Palmöl B |
| Lovibond Farbzahl rot | ¼" | 19,1 | 15,7 |
| Lovibond Farbzahl gelb | ¼" | > 70 | > 70 |
| Phosphor | ppm | 11 | 13 |
| Eisen | ppm | 3,6 | 4,7 |

Die rohen Palmöle wurden auf den folgenden Wegen raffiniert:

### a) Raffination von Palmöl A, mit Entschleimung:

Für die Raffination des Palmöls A wurde das getrocknete und entgaste rohe Palmöl zunächst mit 0,06 Ges.-% H₃PO₄ (50 %) versetzt und das Gemisch bei 95 °C 15 Minuten unter Atmosphärendruck gerührt. Anschließend wurden 0,2 % H₂O zugegeben und weitere 10 min unter Atmosphärendruck gerührt. Nach der Entschleimung wurde das Ö1 mit.jeweils 2 Gew.-% der in Tabelle V angegebenen Bleicherden versetzt. Das Gemisch wurde zunächst bei Atmosphärendruck für 20 Minuten bei 95 °C gerührt, dann der Druck auf 100 mbar erniedrigt und die Mischung für weitere 30 Minuten bei 95 °C gerührt. Nach der Bleichung wurde das Öl bei 80 °C über eine Filternutsche, welche mit einem Filterpapier belegt war, filtriert.

Die Desodorierung des gebleichten Öls erfolgte, indem bei einem Druck von < 1 mbar zunächst für 30 Minuten überhitzter Wasserdampf (Austrittstemperatur: 270 °C) und anschließend für weitere 60 Minuten überhitzter Wasserdampf (Austrittstemperatur: 240 °C) durch das Öl geleitet wurde. Das raffinierte Öl wurde anschließend charakterisiert. Die Werte sind ebenfalls in Tabelle VII angegeben.

### b) Raffination von Palmöl A, ohne Entschleimung

Für die Raffination wurde das getrocknete und entgaste rohe Palmöl direkt mit 2,0 Gew.-% den in Tabelle VII angegebenen Bleicherden versetzt und die Mischung bei einem Druck von 100 mbar und einer Temperatur von 95 °C 30 Minuten lang'gerührt. Die Mischung wurde dann wie bei a) angegeben filtriert und desodoriert. Die für das raffinierte Palmöl gefundenen Werte sind ebenfalls in Tabelle VII angegeben.

### c) Raffination von Palmöl B, mit Entschleimung:

Palmöl B wurde zunächst wie bei a) angegeben entschleimt und anschließend zum Bleichen mit jeweils 1,35 Gew.-% der in Tabelle VII angegebenen Bleicherden versetzt. Die Mischung wurde zunächst bei 95 °C für 20 Minuten unter Atmosphärendruck gerührt. Anschließend wurde die Temperatur auf 115 °C erhöht und die Mischung bei einem Druck von 100 mbar für weitere 25 Minuten gerührt. Die Mischung wurde bei 80 °C über eine Filternutsche filtriert, welche mit einem Filterpapier belegt war. Die Desodorierung des gebleichten Öles wurde durchgeführt, indem zunächst für 30 Minuten Wasserdampf, der eine Austrittstemperatur von 270 °C besaß, durch das Öl geleitet wurde und anschließend das Ö1 für weitere 60 Minuten bei einem Druck von < 1 mbar mit überhitztem Wasserdampf behandelt, der eine Austrittstemperatur von 240 °C besaß. Das raffinierte Öl wurde anschließend charakterisiert. Die Werte sind ebenfalls in Tabelle VII angegeben.

### d) Raffination von Palmöl B, ohne Entschleimung

Das getrocknete und entgaste Palmöl B wurde direkt mit 1,35 Gew.-% Bleicherde versetzt und die Mischung bei 115 °C für 25 Minuten bei 100 mbar gerührt. Nach Abschluss der Behandlung wurde das Öl bei 80 °C über eine Filternutsche filtriert, die mit einem Filterpapier belegt war. Für die Desodorierung wurde zunächst für 30 Minuten überhitzter Wasserdampf durch das Öl geleitet, welcher eine Austrittstemperatur von 270 °C aufwies. Anschließend wurde die Desodorierung fortgesetzt, indem für weitere 60 Minuten bei einem Druck von < 1 mbar überhitzter Wasserdampf durchgeleitet wurde, der eine Austrittstemperatur von 240 °C aufwies. Die Daten der raffinierten Palmöle sind in Tabelle VII angegeben.

**Tabelle VII**

| Raffination von Palmöl | | | | | | | | | |
|---|---|---|---|---|---|---|---|---|---|
| Palmöl | Bleicherde | | E/N | Lovibond Farbzahlen (PFX 995) | | | | P pm | Fe ppm |
| | Typ | Dos. (%) | | Bleichung (½") | | Vollraffinat (5¼") | | | |
| | | | | rot | gelb | rot | gelb | | |
| A | Supreme 190 FF | 2,00 | ja | 9,6 | 70+ | 2,2 | 28 | <0,8 | <0,1 |
| | | " | -- | 9,5 | 70+ | 1,9 | 23 | 0,9 | 0,2 |
| | Optimum 215 FF | 2,00 | ja | 8,9 | 70+ | 2,3 | 35 | <0,8 | <0,1 |
| | | " | -- | 8,3 | 70+ | 2,0 | 26 | 1,0 | 0,2 |
| | Beispiel 2 | 2,00 | ja | 16,5 | 70+ | 2,7 | 46 | <0,8 | <0,1 |
| | | " | -- | 12,9 | 70+ | 2,3 | 35 | <0,8 | <0,1 |
| | Standard 310 FF | 2,00 | ja | 13,5 | 70+ | 2,8 | 46 | 0,9 | <0,1 |
| | | " | -- | 10,5 | 70+ | 2,6 | 31 | 2,8 | 0,8 |
| | | | | | | | | | |
| B | Optimum 215 FF | 1,35 | ja | 7,6 | 70+ | 2,4 | 32 | <0,8 | <0,1 |
| | | " | -- | 8,3 | 70+ | 2,3 | 29 | 3,2 | 0,7 |
| | Beispiel 2 | 1,35 | ja | 16,1 | 70+ | 2,6 | 39 | <0,8 | <0,1 |
| | | " | -- | 13,4 | 70+ | 2,4 | 34 | <0,8 | <0,1 |
| | | 1, 00 | -- | 15,7 | 70+ | 2,6 | 39 | <0,8 | <0,1 |

| | | | | | | | | | |
|---|---|---|---|---|---|---|---|---|---|
| E/N: Entschleimung/Nassbleichung Tonsil Supreme 190 FF, Optimum 215 FF, Standard 310 FF sind Produkte der Süd-Chemie AG, München | | | | | | | | | |

Wird die Entschleimung weggelassen, so werden für alle Bleicherden überraschenderweise sogar niedrigere Lovibond-Farbzahlen nach Desodorierung als mit Entschleimung erhalten. Mit Ausnahme der Beispiele, in welchen die Bleicherde aus Beispiel 2 eingesetzt wurde, werden jedoch zu hohe Werte für den Gehalt des Öles an Phosphor und Eisen gefunden. Bei den mit der Bleicherde aus Beispiel 2 gebleichten Ölen werden sowohl mit als auch ohne Entschleimung/Nassbleichung Werte für Eisen und Phosphor gefunden, die unterhalb der Nachweisgrenze von 0,8 bzw. 0,1 ppm liegen. Im Falle von Palmöl "B" konnte gezeigt werden, dass ein gutes Raffinationsergebnis auch noch bei einer reduzierten Dosierung von 1,0 Gew.-% erreicht werden kann.

## Patentansprüche

1. Verfahren zur Herstellung eines Adsorptionsmittels, insbesondere eines Bleieherdeproduktes, wobei ein Rohton
- mit einer spezifischen Oberfläche von 200 bis 280 m²/g,
- einer Ionenaustauschfähigkeit von mehr als 40 meq/100g, und
- einem Porenvolumen von 0,7 bis 1,0 ml/g, wobei mindestens 40% des Porenvolumens von Poren bereitgestellt werden, die einen Porendurchmesser von mindestens 14 nm aufweisen und höchstens 25 % des Porenvolumens von Poren bereitgestellt werden, die einen Durchmesser von weniger als 7,5 nm aufweisen;
- und welcher bezogen auf den wasserfreien Rohton einen Al₂O₃-Gehalt von weniger als 11 Gew.-% sowie einen SiO₂-Gehalt, bezogen auf den wasserfreien Rohton, von mehr als 65 Gew.-% aufweiet,
einer Aktivierung unterworfen wird.

2. Verfahren nach Anspruch 1, wobei der Rohton einen durch Weinsäure auslaugbaren Anteil an Schwermetallen As, Pb, Cd, Hg von weniger als 25 ppm aufweist.

3. Verfahren nach Anspruch 1 oder 2, wobei der Anteil an durch Weinsäure auslaugbarem Arsen kleiner als 1,5 ppm und/oder der Anteil des durch Weinsäure auslaugbaren Bleis kleiner als 5 ppm und/oder der Anteil an durch weinsäure auslaugbarem Cadmium kleiner als 0,5 ppm und/oder der Anteil des durch Weinsäure auslaugbaren Quecksilbers kleiner als 0,2 ppm ist.

4. Verfahren nach einem der vorhergehenden Ansprüche, wobei das Sedimentvolumen des Rohtons in Wasser kleiner als 10 ml/2g ist.

5. Verfahren nach einem der vorhergehenden Ansprüche, wobei der Rohton zur oberflächenaktivierung mit einer Säure in Kontakt gebracht wird.

6. Verfahren nach Anspruch 5, wobei die Säure als wässrige Lösung mit dem Rohton in Kontakt gebracht wird.

7. Verfahren nach Anspruch 5 oder 6, wobei die säure eine Mineralsäure ist.

8. Verfahren nach Anspruch 7, wobei die Mineralsäure Schwefelsäure oder Phosphorsäure ist.

9. Verfahren zur Raffination von Fetten und/oder Ölen, wobei
- ein Rohöl bereitgestellt wird, welches aus einem pflanzlichen oder tierischen Material gewonnen ist;
- das Rohöl einer Bleichung unterworfen wird, indem es mit einem Bleicherdeprodukt behandelt wird,
welches einen Rohton enthält, der
- eine spezifische Oberfläche von 200 bis 280 m²/g ;
- eine Ionenaustauschkapazität von mehr als 40 meq/100g;
- ein Porenvolumen von 0,7 bis 1,0 ml/g aufweist, wobei mindestens 40% des Porenvolumens von Poren bereitgestellt werden, die einen Porendurchmesser von mindestens 14 um aufweisen und höchstens 25 % des Porenvolumens von Poren bereitgestellt werden, die einen Durchmesser von weniger als 7,5 nm aufweisen,
- wobei der Rohton, bezogen auf den wasserfreien Rohton, einen Al₂O₂-Gehalt von weniger als 11 Gew.-% sowie einen SiO₂-Gehalt, bezogen auf den wasserfreien Rohton, von mehr als 65 Gew.-% aufweist, und
- das gebleichte Öl von dem Bleicherdeprodukt abgetrennt wird.

10. Verfahren nach Anspruch 9, wobei das Rohöl einen Phosphorgehalt, berechnet als P, von weniger als 100 ppm aufweist.

11. Verfahren nach einem der Ansprüche 9 oder 10, wobei das Rohöl keiner Entschleimung unterworfen wird.

12. Verfahren nach einem der Ansprüche 9 bis 11, wobei das Bleicherdeprodukt erhalten wird, indem der Rohton durch Behandlung mit Säure aktiviert wird, wozu der Rohton zur Oberflächenaktivierung mit einer Säure in Kontakt gebracht wird.

## Claims

1. Method for producing an adsorbent, in particular a bleaching earth product, wherein a crude clay
- with a specific surface area of from 200 to 280 m²/g,
- an ion exchangeability of more than 40 meq/100g, and
- a pore volume of 0.7 to 1.0 ml/g, wherein at least 40% of the pore volume is provided by pores which have a pore diameter of at least 14 nm and at most 25% of the pore volume is provided by pores which have a diameter of less than 7.5 nm;
- and which has an Al₂O₃ content of less than 11 wt.-% relative to the anhydrous crude clay as well as an SiO₂ content of more than 65 wt.-% relative to the anhydrous crude clay,
is subjected to an activation.

2. Method according to claim 1, wherein the crude clay has a proportion of heavy metals As, Pb, Cd, Hg of less than 25 ppm which can be leached out by tartaric acid.

3. Method according to claim 1 or 2, wherein the proportion of arsenic which can be leached out by tartaric acid is less than 1.5 ppm and/or the proportion of lead which can be leached out by tartaric acid is less than 5 ppm and/or the proportion of cadmium which can be leached out by tartaric acid is less than 0.5 ppm and/or the proportion of mercury which can be leached out by tartaric acid is less than 0.2 ppm.

4. Method according to one of the previous claims, wherein the sediment volume of the crude clay in water is less than 10 ml/2g.

5. Method according to one of the previous claims, wherein the crude clay is brought into contact with an acid for surface activation.

6. Method according to claim 5, wherein the acid is brought into contact with the crude clay as aqueous solution.

7. Method according to claim 5 or 6, wherein the acid is a mineral acid.

8. Method according to claim 7, wherein the mineral acid is sulphuric acid or phosphoric acid.

9. Method for refining fats and/or oils, wherein
- a crude oil which is obtained from a plant or animal material is provided;
- the crude oil is subjected to a bleaching by treating it with a bleaching earth product which contains a crude clay which has
- a specific surface area of from 200 to 280 m²/g,
- an ion exchangeability of more than 40 meq/100g;
- a pore volume of from 0.7 to 1.0 ml/g, wherein at least 40% of the pore volume is provided by pores which have a pore diameter of at least 14 nm and at most 25% of the pore volume is provided by pores which have a diameter of less than 7.5 nm,
- wherein the crude clay has an Al₂O₃ content of less than 11 wt.-% relative to the anhydrous crude clay as well as an SiO₂ content of more than 65 wt.-% relative to the anhydrous crude clay, and
- the bleached oil is separated from the bleaching earth product.

10. Method according to claim 9, wherein the crude oil has a phosphorus content, calculated as P, of less than 100 ppm.

11. Method according to one of claims 9 or 10, wherein the crude oil is not subjected to a degumming.

12. Method according to one of claims 9 to 11, wherein the bleaching earth product is obtained by activating the crude clay by treatment with acid, for which the crude clay is brought into contact with an acid for surface activation.

## Revendications

1. Procédé de préparation d'un adsorbant, notamment d'un produit de terre décolorante, une argile brute
- avec une surface spécifique comprise entre 200 et 280 m²/g,
- une capacité d'échange d'ions supérieure à 40 meq/100 g, et
- un volume poreux compris entre 0,7 et 1,0 ml/g, au moins 40 % dudit volume poreux correspondant à des pores dont le diamètre est supérieur ou égal à 14 nm et au maximum 25 % dudit volume poreux correspondant à des pores dont le diamètre est inférieur à 7,5 nm;
- et qui présente une teneur en Al₂O₃ inférieure à 11 % en poids, par rapport à l'argile brute anhydre, ainsi qu'une teneur en SiO₂ supérieure à 65 % en poids, par rapport à l'argile brute anhydre,
étant soumise à une activation.

2. Procédé selon la revendication 1, ladite argile brute présentant un taux de métaux lourds As, Pb, Cd, Hg extractible à l'acide tartrique inférieur à 25 ppm.

3. Procédé selon la revendication 1 ou 2, le taux d'arsenic extractible à l'acide tartrique étant inférieur à 1,5 ppm et/ou le taux de plomb extractible à l'acide tartrique étant inférieur à 5 ppm et/ou le taux de cadmium extractible à l'acide tartrique étant inférieur à 0,5 ppm et/ou le taux de mercure extractible à l'acide tartrique étant inférieur à 0,2 ppm,

4. Procédé selon l'une des revendications précédentes, l'indice de gonflement de ladite argile brute dans l'eau étant inférieur à 10 ml/2 g.

5. Procédé selon l'une des revendications précédentes, ladite argile brute étant mise en contact avec un acide afin d'activer sa surface.

6. Procédé selon la revendication 5, ledit acide étant mis en contact avec ladite argile brute sous forme d'une solution aqueuse.

7. Procédé selon les revendications 5 ou 6, ledit acide étant un acide minéral.

8. Procédé selon la revendication 7, ledit acide minéral étant de l'acide sulfurique ou de l'acide phosphorique.

9. Procédé de raffinage de graisses et/ou d'huiles,
- une huile brute étant mise à disposition laquelle a été extraite d'une matière végétale ou animale;
- ladite huile brute étant soumise à une décoloration en la traitant avec un produit de terre décolorante le quel contient une argile brute qui présente
- une surface spécifique comprise entre 200 et 280 m²/g,
- une capacité d'échange d'ions supérieure à 40 meg/100 g
- un volume poreux compris entre 0,7 et 1,0 ml/g, au moins 40 % dudit volume poreux correspondant à des pores dont le diamètre est supérieur ou égal à 14 nm et au maximum 25 % dudit volume poreux correspondant à des pores dont le diamètre est inférieur à 7,5 nm,
- ladite argile brute présentant une teneur en Al₂O₃ inférieure à 11 % en poids, par rapport à l'argile brute anhydre, ainsi qu'une teneur en SiO₂ supérieure à 65 % en poids, par rapport à l'argile brute anhydre, et
- l'huile décolorée étant séparée dudit produit de terre décolorante.

10. Procédé selon la revendication 9, ladite huile brute présentant une teneur en phosphore inférieure à 100 ppm, exprimée en P.

11. Procédé selon l'une des revendications 9 ou 10, ladite huile brute n'étant soumise à aucune démucilagination.

12. Procédé selon l'une des revendications 9 à 11, ledit produit de terre décolorante étant obtenu en activant ladite argile brute par un traitement avec un acide, l'argile brute étant à cet effet mise en contact avec un acide afin d'activer sa surface.
